## Europäisches Patentamt

## European Patent Office

## Office européen des brevets

(19)

(11) Veröffentlichungsnummer: **0 025 568**
**A1**

(12)

# EUROPÄISCHE PATENTANMELDUNG

(21) Anmeldenummer: **80105307.5**

(22) Anmeldetag: **05.09.80**

(51) Int. Cl.³: **A 01 B 13/14,** A 01 B 17/00

(30) Priorität: **13.09.79 DE 2936947**
**20.11.79 DE 2946689**

(43) Veröffentlichungstag der Anmeldung: **25.03.81**
**Patentblatt 81/12**

(84) Benannte Vertragsstaaten: **AT BE CH FR GB IT LI NL SE**

(71) Anmelder: **Weichel, Ernst, Bahnhofstrasse 1,**
**D-7326 Heiningen (DE)**

(72) Erfinder: **Weichel, Ernst, Bahnhofstrasse 1,**
**D-7326 Heiningen (DE)**

(54) **Verfahren und Arbeitsgerät zur Bodenlockerung.**

(57) Bei einem Verfahren zur Lockerung verdichteter, vorzugsweise Pflanzenbestände tragender Ackerböden, bei welchem wenigstens zwei über- bzw. untereinanderliegende Bodenschichten unterfahren, angehoben, aufgebrochen und ohne wesentliche gegenseitige Vermischung wieder auf dem Untergrund bzw. auf der unteren gelockerten Bodenschicht abgelegt werden, ist vorgesehen, in der obersten Bodenschicht (101) überwiegend vertikal verlaufende Risse (105a, 105b) zwischen den ihre Horizontallage im wesentlichen beibehaltenden Schollen (106) zu erzeugen, die unteren Bodenschichten (102) in kleinere Schollen (107) bzw. Krümel zu zertrümmern und von den größeren Schollen (106) der obersten Bodenschicht (101) bedeckt zu halten, so daß auf der oberen Bodenschicht (101) lebende Pflanzen (103) nach erfolgter Lockerung weiterwachsen können.

Erreicht wird dies mit einem Arbeitsgerät, bei welchem wenigstens zwei, an einer motorisch angetriebenen Welle angeordnete, in einer vertikalen Ebene bewegte Haltestiele vorgesehen sind, an denen zumindest je ein zur vorderen Schneidkante hin nach unten geneigtes, flügelförmiges Lockerungsschar zum Unterfahren, Anheben, Aufbrechen und Ablegen wenigstens einer Bodenschicht angeordnet ist, wobei jeder Haltestiel mindestens zwei übereinander angebrachte Lockerungsschare (108, 109) aufweist.

ACTORUM AG

ERNST WEICHEL

7326 Heiningen, 1.9.1980
Bahnhofstraße 1

0025568

- 1 -

## Verfahren und Arbeitsgerät zur Bodenlockerung

Gegenstand der Erfindung ist ein Verfahren zur Lockerung verdichteter, vorzugsweise Pflanzenbestände tragender Ackerböden, bei welchem wenigstens zwei über- bzw. untereinander liegende Bodenschichten unterfahren, angehoben, aufgebrochen und ohne wesentliche gegenseitige Vermischung wieder auf dem Untergrund bzw. auf der unteren gelockerten Bodenschicht abgelegt werden und ein Arbeitsgerät zur Ausführung des Verfahrens. Die bislang bekannten Verfahren und die zu ihrer Ausführung verwendeten Vorrichtungen haben den Nachteil, daß die oberste Schicht bei schweren Böden entweder so stark gekrümelt werden muß, daß bereits auf ihr wachsende Pflanzen zerstört werden, oder daß die Bodenschicht nur unzureichend aufgelockert werden kann, wenn sie so schonend unterfahren, angehoben und wieder abgelegt wird, daß die trotz entstehender vertikaler Risse in einem gewissen Verbund untereinander verbleibenden Erdschollen ihre etwa horizontale Lage weitgehend beibehalten, sodaß die Pflanzen anschließend weiterwachsen können.

Hier knüpft nun die vorliegende Erfindung an, mit der Aufgabe, ein Verfahren und eine Vorrichtung zu schaffen, mit welchem tiefere Bodenschichten intensiver gelockert, d.h. zerkleinert und gekrümelt werden können, ohne daß es erforderlich ist, auch die oberste Bodenschicht so sehr zu zerkleinern, daß auf ihr wachsende Pflanzenbestände zerstört werden.

Die Erfindung geht dabei von der Erkenntnis aus, daß eine Auflockerung der eine gute, sog. "lebend verbaute Krümelstruktur" aufweisenden obersten Bodenschicht in den meisten Fällen nicht nur unnötig, sondern für die Bodengare und das Bodenleben und damit für den Ertrag unmittelbar schädlich ist. Die bisher übliche Bearbeitung dieser gut gekrümelten obersten Bodenschicht erforderte daher nicht nur einen unnötigen Arbeits- und Energieaufwand, sondern verursachte auch immer wieder
beträchtliche Ertragsausfälle durch Verluste an Wasser
und Nährstoffen oder Auswinterung. Falls durch eine
Bearbeitung der obersten Bodenschicht Ernterückstände
oder auf dem Boden wachsende Gründüngung, Unkraut o.ä.
am weiteren Wachstum gehindert werden sollen, genügt
in aller Regel eine möglichst flache Bearbeitung auf
eine Tiefe von wenigen Zentimetern. Das hat u.a.
auch den Vorteil, daß alle Wasserverluste vermieden
werden und ein günstiger, "abgesetzter" Bodenhorizont
für die Ablage von Saatkörnern erhalten bleibt.

Da die weltweit zunehmende Bodenerosion dringend eine
Verbesserung der bekannten Verfahren erfordert, soll das
neue Verfahren insbesondere die Lockerung tieferer Bodenschichten ermöglichen, ohne daß es unbedingt erforderlich ist, die auf dem Erdboden wachsenden Pflanzen, z.B.
Gründüngungspflanzen völlig zu zerstören oder die humusreiche, besser gekrümelte und stark belebte oberste Bodenschicht mehr als unbedingt notwendig zu zerkleinern, mit
anderen Schichten zu vermischen oder die in ihr vorhandene
Bodenfauna zu zerstören.

Die vorstehend umrissene Aufgabe wird im wesentlichen
dadurch gelöst, daß in der obersten Bodenschicht überwiegend vertikal verlaufende Risse zwischen den ihre Horizontallage im wesentlichen beibehaltenden Schollen erzeugt und die unteren Bodenschichten in kleinere Schollen bzw. Krümel zertrümmert und von den größeren Schollen der obersten Bodenschicht bedeckt werden, so daß auf der oberen Bodenschicht lebende Pflanzen nach erfolgter Lockerung ungehindert weiterwachsen können.

Die Zerkleinerung der unteren Bodenschicht erfolgt dabei durch Reiben, Stoßen, Rütteln o.ä. Einwirken auf den Erdboden dieser Schicht zwischen der Oberseite eines diese untere Schicht anhebenden Schares und der Unterseite eines die obere Bodenschicht anhebenden Schares.

Die Lösung dieser Aufgabe bringt insofern einen entscheidenden Fortschritt der Bodenbearbeitung, als es künftig möglich sein wird, den Erdboden auch unter lebenden Pflanzen intensiv zu lockern, sodaß er mehr Wurzelraum bietet, mehr Luft enthält, mehr Wasser speichert und weniger der Erosion ausgesetzt ist, als z.B. in bekannter Weise gepflügte, gefräste oder gegrubberte Böden.

Das neue Verfahren ermöglicht außerdem die Tieflockerung im Sommer, d.h. zu einer günstigeren Jahreszeit und bei meist trockenerem Bodenzustand ohne Verlust an Wachstumszeit für die Vor- und Nachfrüchte, insbesondere auf
mit Stoppelfrüchten oder Untersaaten bzw. Futterpflanzen bewachsenen Feldern. Unabhängig davon kann in einem
zeitlich später durchgeführten, gesonderten Arbeitsgang auch die oberste Bodenschicht stärker gekrümelt
werden. Bei Bedarf werden dabei die auf ihr wachsenden
Pflanzen in an sich bekannter Weise gut mit dem Erdboden vermischt.

Weitere Einzelheiten, Varianten und spezielle Ausgestaltungsbeispiele dieses erfindungsgemäßen Grundgedankens sind in den Schutzansprüchen niedergelegt, sowie
anhand der Zeichnungen im Detail näher erläutert.

Es zeigen:

Figur 1    die Seitenansicht eines Arbeitsgerätes,

Figur 2    eine Vorderansicht zu Fig. 1,

Figur 3    eine Draufsicht zu Fig. 1,

Figur 4    eine schematische Seitenansicht bei Arbeit
           im Boden,

Figur 5    ein perspektivisches Schema der Bodenschichten
           vor und nach der Bearbeitung,

Figur 6    eine schematische, teilweise geschnittene
           Seitenansicht auf die zur Ausführung des
           Verfahrens erforderlichen, im Erdboden arbeitenden Werkzeuge,

Figur 7    eine entsprechende schematische Ansicht auf
           ein etwas abgewandeltes Ausführungsbeispiel,

Figur 8    eine entsprechende Ansicht auf ein weiteres
           Ausführungsbeispiel,

Figur 9    eine entsprechende Ansicht und

Figur 10   eine schematische Draufsicht auf ein weiteres
           Ausführungsbeispiel,

Figur 11   eine schematische Draufsicht,

Figur 12   eine schematische Seitenansicht und

Figur 13   eine schematische Ansicht von hinten auf ein
           weiteres Ausführungsbeispiel.

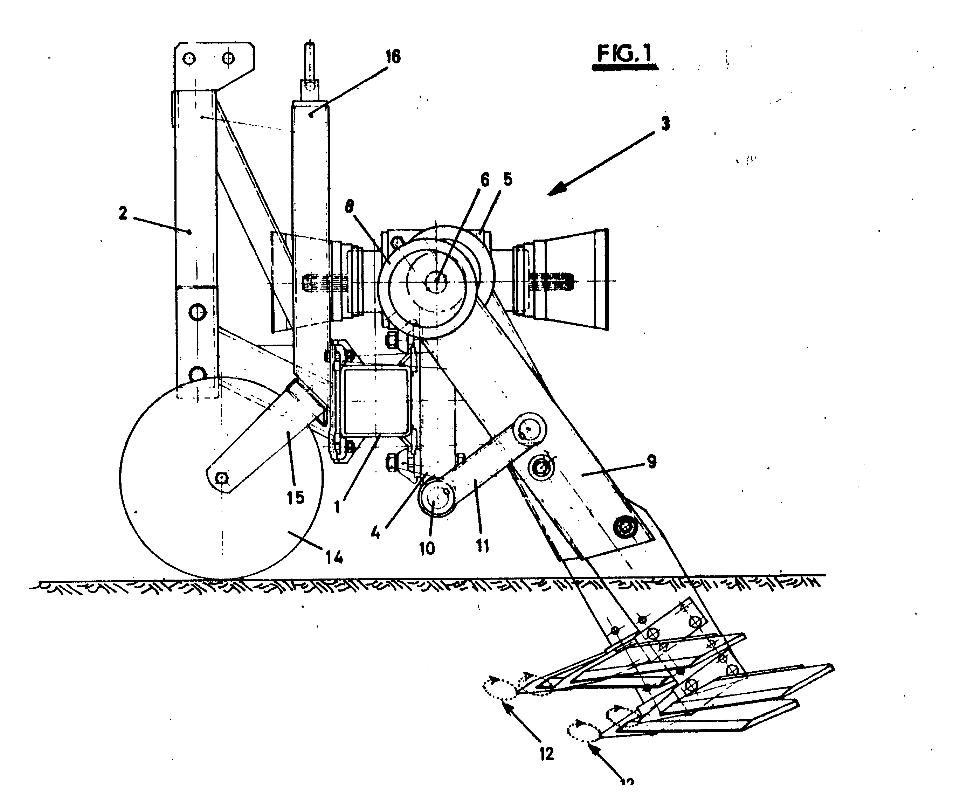

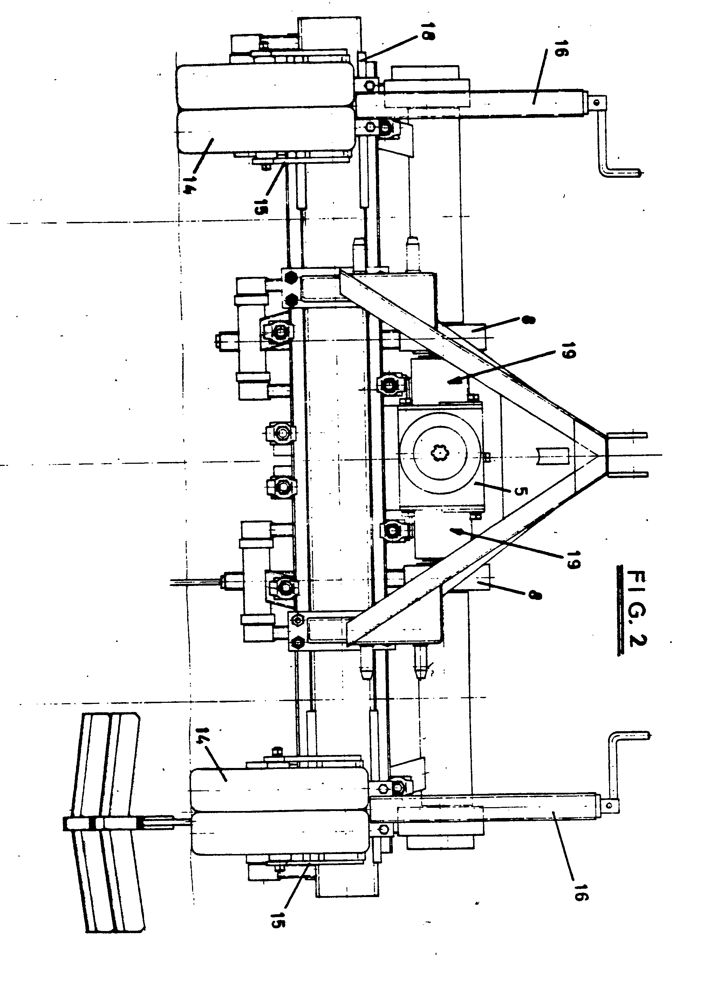

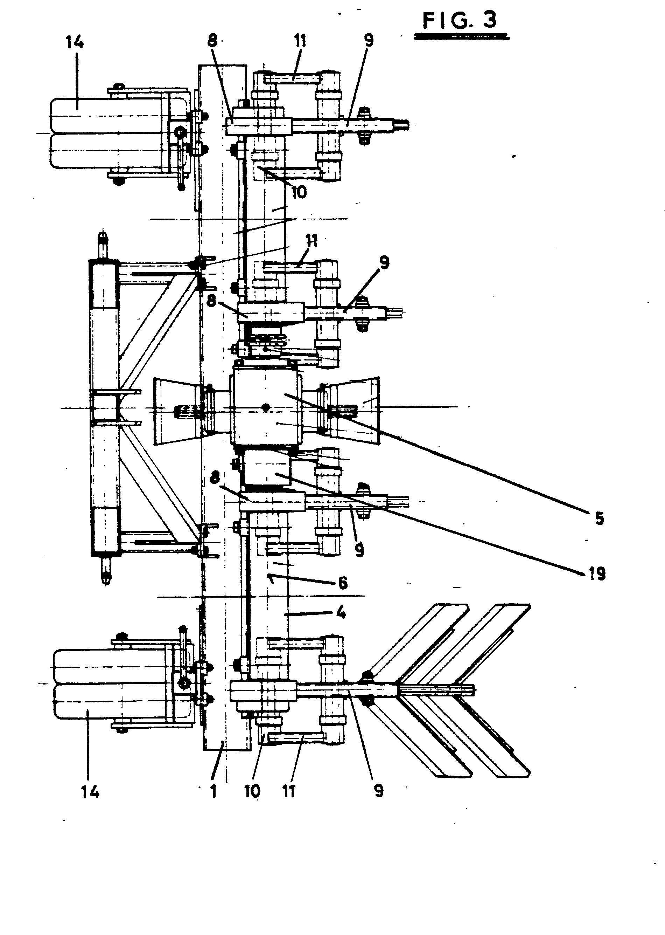

Wie aus den Figuren 1 - 3 ersichtlich ist, weist das Arbeitsgerät einen Querträger 1 auf, an dem in Fahrtrichtung der Anschlußbock 2 für das nicht dargestellte
Dreipunktgestänge eines Schleppers oder dgl. angeordnet
ist. Außerdem sind am Querträger 1 Lagerböcke 4 und das
Getriebe 5 so angebracht, daß in ihnen gelagerte Wellen 6 zueinander und zur Getriebewelle fluchten.

Die äußeren Enden der Abtriebswellen 6 nehmen Exzenterscheiben 7 auf, auf denen Lagerschalen 8 der Haltearme 9
drehbar gelagert sind. Die Haltearme 9 sind über ein an
Schwenklagern 10 angelenkte Lenker 11 ortsfest an den
Lagerböcken 4 abgestützt, sodaß ein Gelenkviereck gebildet ist, das den Scharen 108 und 109, die am freien
Ende der Haltestiele 112 angeordnet sind, die ihrerseits
in den Haltearmen 9 lösbar und auswechselbar befestigt
sind, eine elliptische Bewegungsbahn 12 verleiht.

An dem Querträger 1 sitzen vorn außen zwei Stützräder 14,
deren Halter 15 in ihren Tragrohren 16 höhenverstellbar
angeordnet sind.

Die Höheneinstellung der Stützräder 14 erfolgt über eine
an sich bekannte und im einzelnen nicht näher dargestellte
Spindelvorrichtung, die jeweils über eine Handkurbel betätigt wird.

Das Getriebe 5 weist auf beiden Seiten in Längsrichtung
des Querträgers 1 Abtriebswellenstümpfe 19 auf, die über
an sich bekannte Kupplungen mit den Wellen 6 drehfest
aber lösbar verbunden sind.

Wenn das Arbeitsgerät 3 an einen Traktor angebaut wird, der über eine nicht dargestellte Gelenkwelle das Getriebe 5 antreibt und die Stützräder 14 des Arbeitsgerätes in Arbeitsstellung auf der Bodenoberfläche abrollen, greifen die Schare 108, 109 und die unteren Teile der Haltestiele 112 in den verdichteten Erdboden ein, in dem sie auf einer geschlossenen Kurvenbahn 12 im Uhrzeigersinn bewegt werden und dadurch auf die von ihnen unterfahrenen Bodenschichten 101 und 102 eine Art Rüttelbewegung ausüben.

Da die von der Oberseite 109a der unteren Schare 109 angehobene tiefere Bodenschicht 102 in rascher Folge nach oben geworfen wird, prallt sie ständig gegen die Unterseite 108b des oberen Schares, die sie sofort wieder nach unten wirft. Die untere Bodenschicht wird hierbei zwischen den einander zugewandten Seiten 108b bzw. 109a der beiden Schare 108 und 109 durch ständiges Stoßen, Reiben, Werfen und Aufprallen erheblich intensiver zerkleinert als die nur von unten angehobene obere Bodenschicht.

In der oberen Bodenschicht werden bei möglichst flach geneigter Einstellung der Lockerungsschare vor allem von den Haltestielen 9 bzw. 112 lediglich in Fahrtrichtung verlaufende vertikale Risse erzeugt.

Die Vertikalbewegung der Lockerungsschare erzeugt außerdem
vorwiegend quer zur Fahrtrichtung verlaufende Risse 105b,
die aber nichts daran ändern, daß die in der Oberschicht
101 entstehenden größeren Schollen 106 ihre ursprüngliche Lage zueinander und zur Bodenoberfläche zumindest im
wesentlichen beibehalten!

Obwohl daher die untere Bodenschicht stärker zerkleinert
und auch gemischt wird, verbleibt den auf der Bodenoberfläche wachsenden Pflanzen beim Vorhandensein von genügend
Wasser ein so hoher Anteil von in den großen Schollen 106
befindlicher, unbeschädigter Wurzelmasse, daß sie anschließend weiterwachsen können. Ihre Wurzeln können sich
in dem gelockerten Boden sogar günstig entwickeln, weil
der Boden besser belüftet ist, einen geringeren Widerstand bildet und die in der Folgezeit anfallenden Niederschläge restlos gespeichert werden, sodaß sie nicht,
wie auf verdichteten Böden, zu einem erheblichen Teil
oberflächlich ablaufen.

Das Verfahren nach der Erfindung ermöglicht daher die intensive Bodenlockerung unter lebenden Pflanzenbeständen,
die volle Ausnutzung der Vegetationszeit und aller natürlichen Wachstumsfaktoren, die Verhinderung von Erosion
und damit beträchtliche Ertragssteigerungen sowohl im gemäßigten Klima, als auch unter tropischen oder ariden
Verhältnissen.

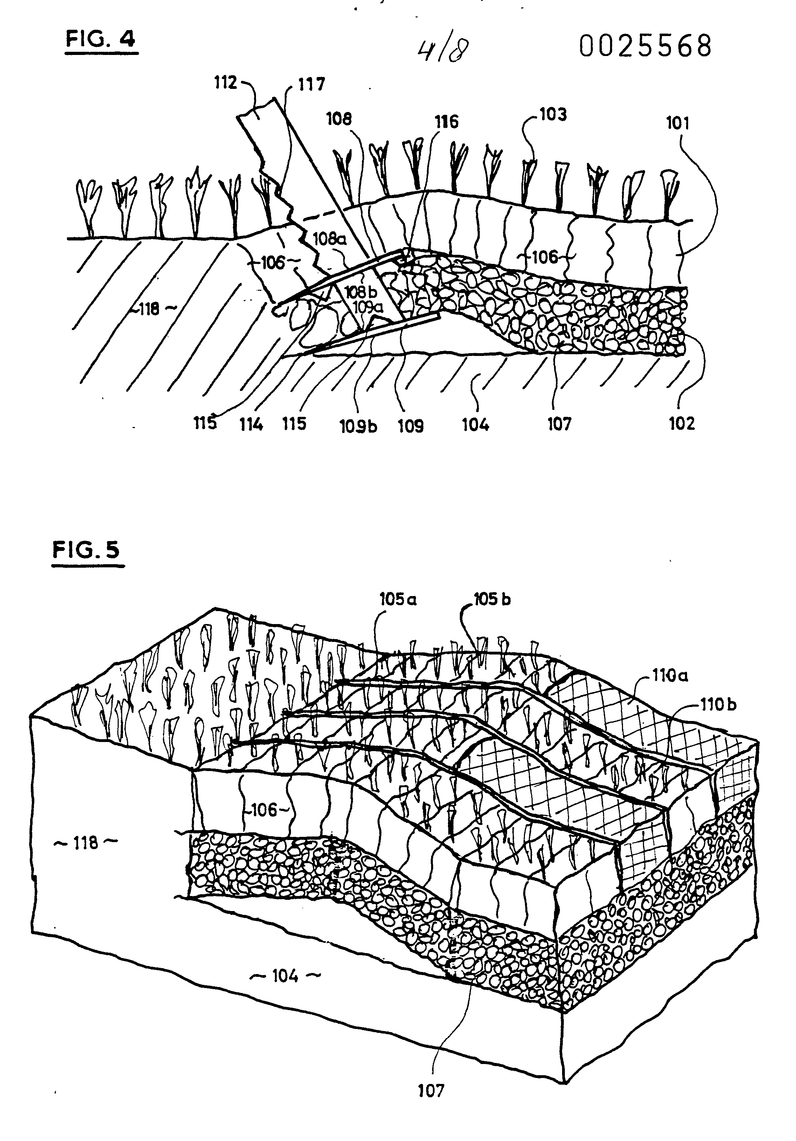

Wie in Fig. 4 schematisch dargestellt, schlägt
die Erfindung vor, an der Unterseite 108b des oberen Schares und auf der Oberseite 109a des unteren
Schares Messer 115 in einem gewissen Abstand nebeneinander und in Fahrtrichtung gegeneinander versetzt anzubringen, die, vor allem bei höherer
Fahrgeschwindigkeit, eine intensivere Zerkleinerung
der unteren Erdschicht bewirken.

Zu dem gleichen Zweck kann an der hinteren Kante
der Unterseite 109b des oberen Schares eine sich
quer zur Fahrtrichtung erstreckende Rippe 116 angebracht werden, die sich im sog. Freiwinkel dieses
Schares befindet und daher den Durchgang der Erdschicht zwischen den beiden Scharen nicht behindert.
Beide Schare stehen vorzugsweise nicht genau
parallel, sondern in einem spitzen Winkel zueinander, sodaß ihr lichter Abstand an den Scharspitzen
kleiner ist als an den Scharenden.

Um den Bodenwiderstand zu verkleinern und insbesondere
um zu verhindern, daß auf dem Erdboden liegendes langhalmiges Material, z.B. Getreide oder Maisstroh, sich an
der Vorderkante 112a des Haltestieles 112 festsetzt,
kann dieser mit sägeartigen Zähnen versehen werden, die
vorwiegend bei der Aufwärtsbewegung des Haltestieles 112
wirksam werden.

Ein besonderer Vorteil des Verfahrens nach der vorstehend beschriebenen Erfindung liegt darin, daß sog. Verdichtungshorizonte, die vor allem durch Pflug- oder Fräsarbeit, Bodendruck und Radschlupf der Räder von Traktoren, Arbeitsmaschinen und Transportfahrzeugen entstehen, vollständig beseitigt werden können. Mit den bisher bekannten Geräten wurden diese Verdichtungshorizonte lediglich unterfahren, angehoben, aber nur grobschollig zerkleinert.

Bei dem neuen Verfahren werden sie dagegen dadurch intensiv aufgelockert, daß die verdichtete Erdschicht vom oberen Schar überfahren und vom unteren Schar unterfahren wird, und außerdem zwischen beiden Scharen durch die Rüttelbewegungen intensiv zerkleinert wird.

In Abwandlung des beschriebenen Ausführungsbeispieles können je nach Bodenart und Mächtigkeit der verdichteten Schichten nicht nur zwei, sondern auch mehrere Schare in gleichen oder unterschiedlichen Abständen am freien Ende des Haltestieles 112 angeordnet werden, sodaß der Erdboden in jedem Zwischenraum zweier über- bzw. untereinander angeordneter Schare intensiv gelockert, die obere Schicht aber grobschollig erhalten werden kann.

Die intensive Zerkleinerung der tieferen Bodenschichten und die lediglich grobschollige Lockerung der obersten Bodenschicht hat nicht nur auf solchen Böden Vorteile, die mit Pflanzen bedeckt sind. Sie ist auch auf Ackerböden, die mit Ernterückständen oder einer Mulchschicht bedeckt sind oder vorher flach bearbeitet wurden, von Vorteil, weil die intensive Auflockerung tieferer Bodenschichten, insbesondere beim schweren Boden, nur bei verhältnismäßig trockenem Boden durchführbar ist.

Das ist vielfach zu einem Zeitpunkt der Fall, an dem es unerwünscht ist, die Bodenoberfläche stärker zu zerkleinern oder saatfertig herzurichten. Dies beruht darauf, daß die saatfertig hergerichtete Oberschicht bei nachfolgenden Niederschlägen zu viel Wasser aufnimmt und daher z.B. im Herbst nicht mehr abtrocknet. Außerdem würde ein saatfertig hergerichtetes Feld durch Bodenabtragung infolge der Einwirkung von Wind oder starken Niederschlägen und Schlepperspuren bei der späteren Bestellung mehr geschädigt, als eine aus groben Schollen bestehende Oberschicht. Wenn diese grobschollige Struktur bis zum Zeitpunkt der Saat erhalten bleibt, gelangt das Regenwasser durch die Risse zwischen den groben Schollen überwiegend in den Untergrund, sodaß es vollständig gespeichert wird und keine Gefahr der Bodenerosion besteht. Die groben Schollen sind bei späteren Bodenbearbeitungsgängen widerstandsfähiger gegen den Bodendruck von Traktoren und Fahrzeugen.

Die Zerkleinerung der groben Schollen und die Herrichtung eines fertigen Saatbettes kann durch Verwendung an sich bekannter Gerätekombinationen im
selben Arbeitsgang mit dem Drillen oder Pflanzen
der folgenden Kulturart durchgeführt werden. Damit
wird sowohl der Verdichtung der tieferen Bodenschichten vorgebeugt, als auch die Herrichtung eines optimalen Saatbettes in der obersten Bodenschicht und
die Bestellung möglich, ohne daß überhaupt schädliche
Fahrspuren das spätere Wachstum der Pflanzen beeinträchtigen könnten.

Dieses Verfahren sichert daher nicht nur höchste Erträge bei geringstem Aufwand an Dünger, sondern ermöglicht auch die Aufteilung des bei der Tieflockerung
schwerer Böden unvermeidlichen Kraftbedarfes auf wenigstens zwei getrennte Arbeitsgänge.

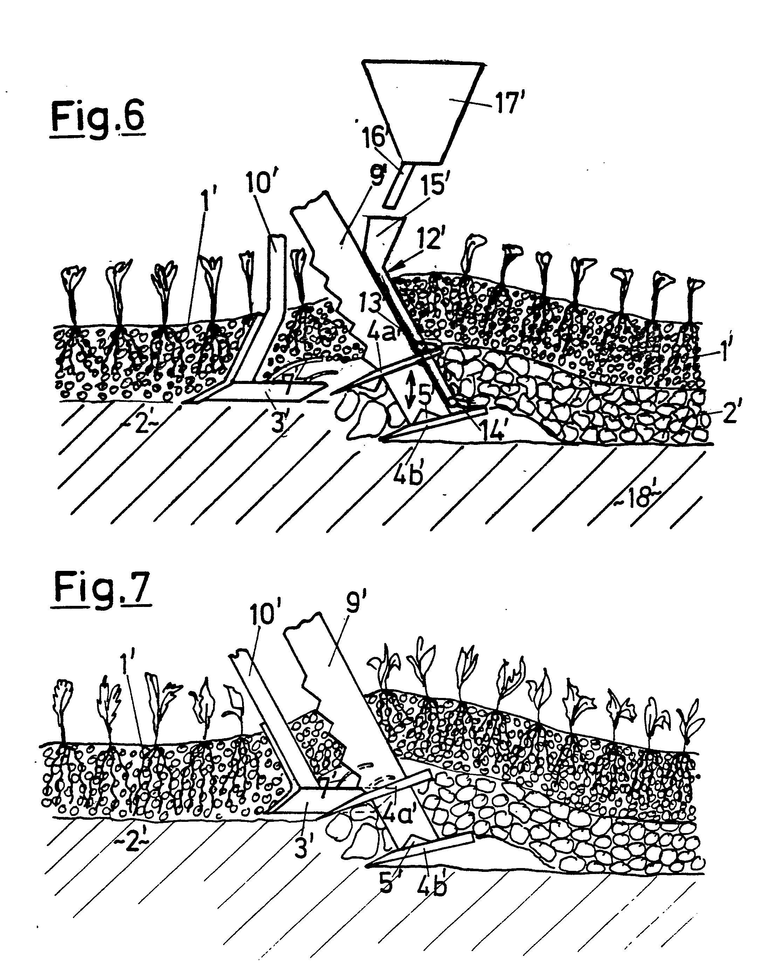

Wie in weiterer Ausgestaltung dieser Erfindung aus der
Figur 6 zu ersehen ist, ist die oberste Bodenschicht 1'
mit Pflanzen bestellt und deshalb gut durchwurzelt und
aus lebend verbauten Krümeln aufgebaut, während die unterste Bodenschicht 2' in der Regel stärker verdichtet ist. Die oberste Bodenschicht wird daher durch die starren Lockerungsschare 3', die an an sich bekannten Stielen 10' befestigt sind, unterfahren und angehoben. Hinter den Stielen 10' sind an sich bekannte Haltestiele 9' angebracht, die über nicht im einzelnen dargestellte Antriebsmittel bewegt sind und an ihrem unteren Ende flügelförmige Lockerungsschare 4b' aufweisen, welche die untere verdichtete Bodenschicht 2' unterfahren, anheben und die entstehenden Erdschollen durch Rüttelbewegungen gegen die Unterseite von hinter den Lockerungsscharen 3' laufenden flügelförmigen Lockerungsscharen 4a' werfen oder stoßen, sodaß die untere Bodenschicht in kleine Schollen zerkleinert und auf dem Untergrund 18' abgelegt wird. Die obere Bodenschicht 1' wird auf der Oberseite der gelockerten und zerkleinerten Unterschicht 2' abgelegt. Am hinteren Rand der Lockerungsschare 3' sind Zinken 7' angebracht, die als Leitrost für die oberste Bodenschicht 1' wirken.

Zudem sind an der hinteren Kante der Haltestiele 9' Leitelemente 12', 15' mit seitlichen Abzweigungen 13', 14' für Düngemittel vorgesehen, die aus einem Behälter 17' über den Auslauf 16' zugeführt werden können.

Das Ausführungsbeispiel gemäß Figur 7 entspricht im wesentlichen demjenigen der Figur 6 mit dem Unterschied, daß die Haltestiele 10' sich schräg von vorne
oben nach hinten unten erstrecken, um die Lockerungsschare 3' in kürzerem Abstand vor den Lockerungsscharen 4a' anordnen zu können.

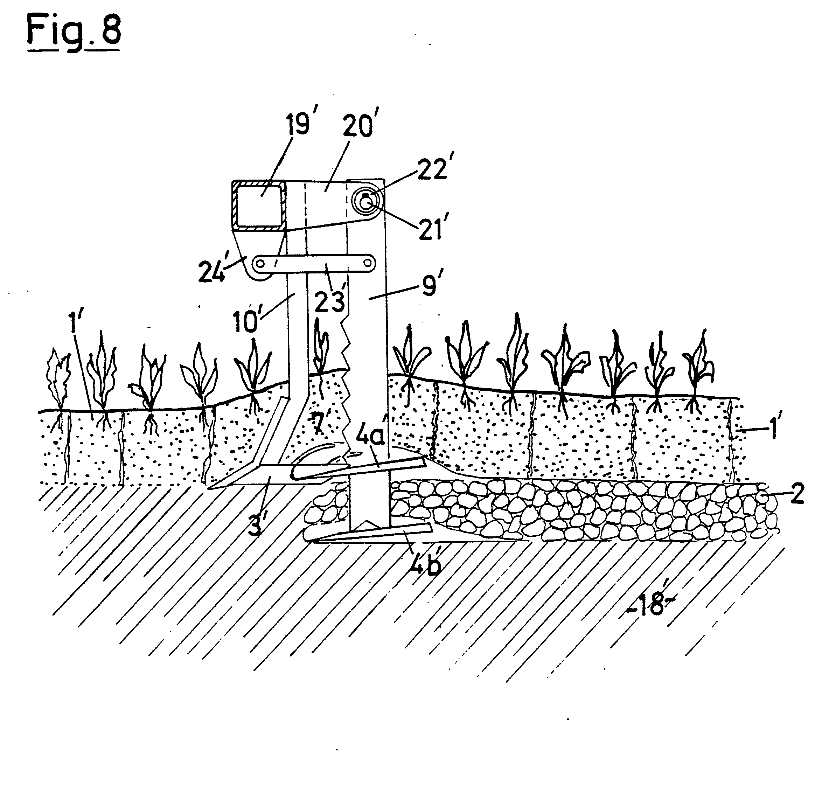

Das Ausführungsbeispiel gemäß Figur 8 entspricht in
seiner Funktion weitgehend dem Ausführungsbeispiel
gemäß Figur 6. Es ist jedoch zu erkennen, daß in der
obersten Bodenschicht 1' quer zur Fahrtrichtung verlaufende Risse entstehen und daß die Haltestiele der
starren Lockerungskörper 10' an einem Tragrohr 19' befestigt sind, das nach hinten ragende Konsolen 20'
aufweist, an welchen eine angetriebene Welle 21' gelagert ist, auf welcher Exzenter 22' sitzen, an denen
das obere Ende des Haltestieles 9' gelagert ist. Der
Haltestiel 9' ist außerdem an einem Lenker 23' angelenkt, der an einer nach unten ragenden Konsole
angelenkt und Bestandteil des an sich bekannten Gelenkviereckes ist, das eine elypsenförmige Bewegungsbahn der Spitzen der Schare 4a' + 4b' ermöglicht.

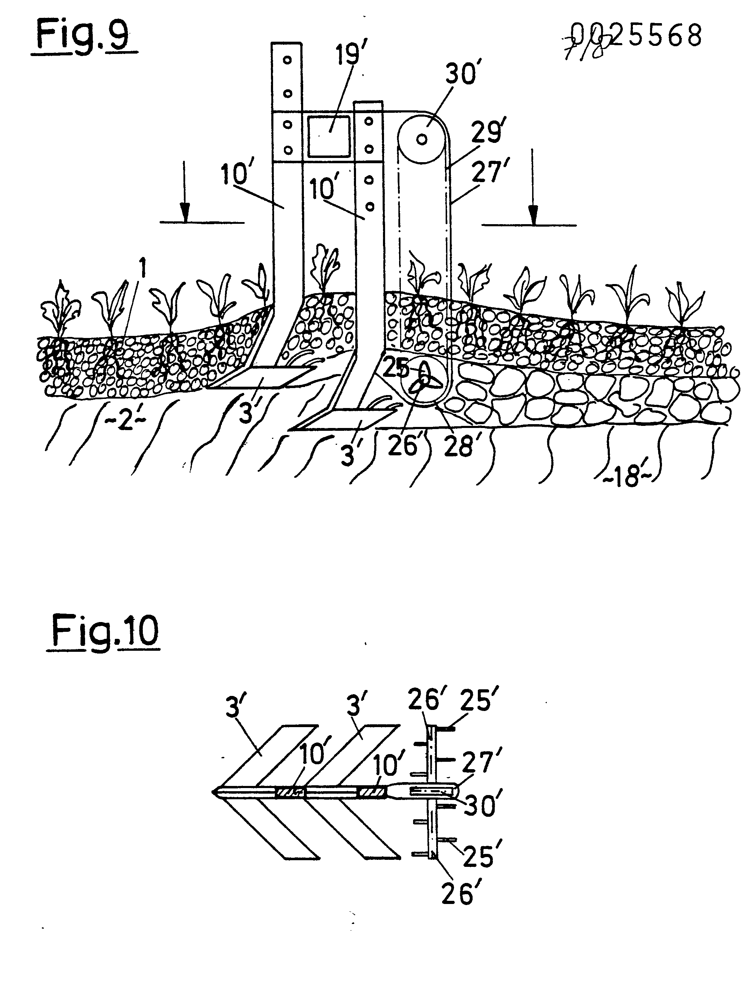

Die Figuren 9 und 10 zeigen ein weiteres Ausführungsbeispiel, an welchem an einem Tragrohr 19' zwei senkrechte Haltestiele 10' angebracht sind, deren Lockerungsschare 3' in unterschiedlicher Höhe angeordnet sind
und jeweils eine der beiden Bodenschichten unterfahren.
Die untere Bodenschicht wird durch Zinken oder Messer
25' zerkleinert, die auf einer angetriebenen Welle 26'
sitzen, die in einem schmalen Gehäuse 27' gelagert
ist und seitlich zu beiden Seiten über dieses Gehäuse
herausragt. Die Welle 26' wird über ein Kettenrad 28',
eine Kette 29' von einem Kettenrad 30' aus angetrieben, das über nicht näher dargestellte, an sich bekannte Antriebsvorrichtungen mit der Gelenkwelle der
Zugmaschine in Antriebsverbindung steht. Dies ermöglicht eine beliebig intensive Zerkleinerung tieferer
Bodenschichten unterhalb einer lediglich vorübergehend
angehobenen, weitgehend unberührten ggf. mit lebenden
Pflanzen bewachsenen oberen Bodenschicht 1'.

Die Welle 26' ist mit unterschiedlicher, vorzugsweise
niedriger Drehzahl antreibbar und mit beliebigen, an
sich bekannten Zinkenformen besetzt. Das schmale Gehäuse 27' ist hinter dem senkrechten Haltestiel 10' angeordnet, der die durchschnittenen Erdschichten in
senkrechter Ebene zerteilt, sodaß trotz des teilweise
im Erdreich geführten Getriebes keine Verstopfungen
entstehen können.

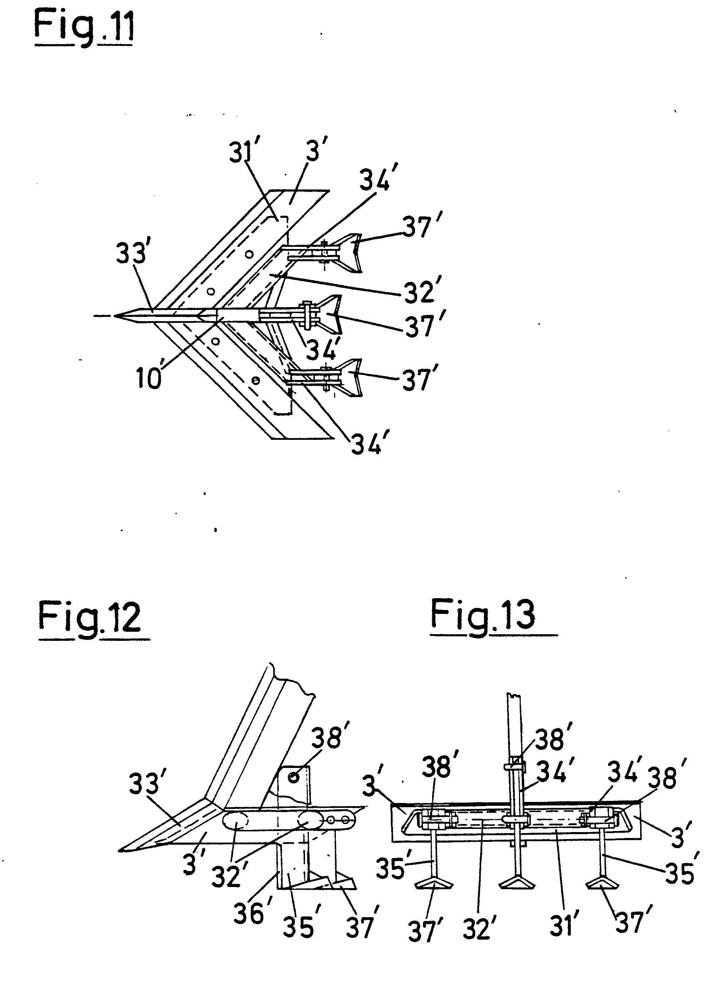

Das in den Figuren 11 bis 13 dargestellte Ausführungs-

beispiel zeigt einen an sich bekannten Haltestiel 10',
an dessen unterem Ende eine an sich bekannte Tragplatte 31' angeordnet ist, auf welcher auswechselbare Lokkerungsschare 3' angeordnet sind, deren einander zugewandte Enden seitlich an einem Meißel 33' anschließen. An der Rückseite der Tragplatte 31' sind Verstärkungsarme 32' angeordnet, an denen Haltetaschen 34' angebracht sind, in denen kleine Haltestiele 35' mit an
ihrer Rückseite angeordneten Gänsefußscharen 37'
angeordnet sind, die die untere Bodenschicht sowohl
in vertikaler als auch in horizontaler Richtung durchschneiden und auflockern.

Die gelockerten Erdschollen der unteren Schicht werden
anschließend durch die weitgehend unbearbeitete, angehobene und wieder abgelegte obere Bodenschicht bedeckt. Diese Ausbildung von Lockerungswerkzeugen ermöglicht daher das Unterfahren und schonende Anheben
der oberen Bodenschicht durch in verhältnismäßig weitem Abstand voneinander angeordnete Haltestiele 10'
und die intensivere Zerkleinerung der unteren Bodenschicht durch in engem Abstand angeordnete starre Werkzeuge, ohne daß die Gefahr von Verstopfungen durch auf
dem Erdboden befindliches Stroh o.ä. besteht. Es ist
daher nicht erforderlich, diese Lockerungswerkzeuge
wie bei üblichen Schwergrubbern in mehreren Reihen hintereinander an mehreren Tragrohren gestaffelt
anzubringen.

Da die Haltestiele 35' mittels Bolzen 38' unterschiedlicher Stärke in den Haltetaschen 34' befestigt sind,
kann jeder einzelne kleine Haltestiel 35' beim Auftreffen auf im Erdboden vorhandene Steine nach dem
Abscheren eines der beiden Bolzen 38' nach hinten
ausschwenken, ohne in die rotierenden Zinken eines
möglicherweise hinter den Haltestielen angeordneten
Arbeitsgerätes zur Saatbettherrichtung zu geraten.
Ein mit einem Lockerungskörper der in den Figuren
11 bis 13 gezeigten neuen Bauart bestücktes Arbeitsgerät zur Bodenlockerung kann daher auf schwerem Boden
sowohl für sich allein, als auch in Verbindung mit einem dahinter angeordneten Arbeitsgerät zur Saatbettherrichtung eingesetzt werden.

Im ersteren Fall wird die tiefere Bodenschicht 2' stärker gelockert als die weitgehend unberührt bleibende
obere Bodenschicht 1'. Im zweiten Fall wird die tiefere Bodenschicht 2' genauso gelockert wie im ersten
Fall, die obere Bodenschicht 1' dagegen durch das zusätzliche Arbeitsgerät saatfertig gekrümelt. Das ist
dann vorteilhaft, wenn sofort nach der Ernte Zwischenfrüchte bestellt oder im Herbst oder Frühjahr Getreide
o.ä. gesät werden soll.

- 1 -

Patentansprüche

1. Verfahren zur Lockerung verdichteter, vorzugsweise
   Pflanzenbestände tragender Ackerböden, bei welchem
   wenigstens zwei über- bzw. untereinander liegende
   Bodenschichten unterfahren, angehoben, aufgebrochen
   und ohne wesentliche gegenseitige Vermischung wieder auf dem Untergrund bzw. auf der unteren gelockerten Bodenschicht abgelegt werden, dadurch gekennzeichnet, daß in der obersten Bodenschicht (101)
   überwiegend vertikal verlaufende Risse (105a, 105b)
   zwischen den ihre Horizontallage im wesentlichen
   beibehaltenden Schollen (106) erzeugt werden, und
   daß die unteren Bodenschichten (102) in kleinere Schollen (107) bzw. Krümel zertrümmert und von den größeren Schollen (106) der obersten Bodenschicht (101) bedeckt werden, sodaß auf der oberen Bodenschicht (101) lebende Pflanzen (103) nach erfolgter Lockerung weiterwachsen können.

2. Verfahren nach Anspruch 1, dadurch gekennzeichnet, daß die Zerkleinerung der unteren Bodenschicht (102) durch Reiben, Stoßen und Rütteln des Erdbodens zwischen der Oberseite (109a) eines die untere Bodenschicht (102) anhebenden Schares (109) und der Unterseite (108b) eines die obere Bodenschicht (101) anhebenden Schares (108) erfolgt.

3. Verfahren nach Anspruch 1, dadurch gekennzeichnet, daß das Unterfahren und Anheben der oberen Bodenschicht (1') durch starre Lockerungsschare (3') und das Unterfahren, Anheben und Zerkleinern der unteren Bodenschicht durch auf einer Kurvenbahn bewegte, angetriebene Lockerungsschare (4') erfolgt.

4. Verfahren nach Anspruch 1, dadurch gekennzeichnet, daß die untere Bodenschicht durch angetriebene rotierende Zinken oder Messer (22') zerkleinert wird.

5. Verfahren nach Anspruch 1, <u>dadurch gekennzeichnet</u>, daß das Unterfahren und Anheben der oberen Bodenschicht (1') durch starre, flügelförmige Lockerungsschare (3') und das Auflockern bzw. Zerkleinern der unteren Bodenschicht durch starre Messer oder Zinken (7') oder Gänsefußschare (37') erfolgt.

6. Verfahren nach mindestens einem der vorhergehenden Ansprüche, <u>dadurch gekennzeichnet</u>, daß in die zerkleinerte tiefere Bodenschicht Düngerstoffe eingebracht und im gelockerten Boden verteilt werden.

7. Verfahren nach Anspruch 6, <u>dadurch gekennzeichnet</u>, daß die Verteilung der Düngerstoffe durch Rüttelbewegungen der angetriebenen Lockerungsschare (4') erfolgt.

8. Verfahren nach mindestens einem der vorhergehenden Ansprüche, <u>dadurch gekennzeichnet</u>, daß in einem zeitlich später durchgeführten weiteren Arbeitsgang auch die oberste Bodenschicht (101) stärker gekrümelt und die auf ihr wachsenden Pflanzen (103) in an sich bekannter Weise mit dem Erdboden vermischt werden.

9. Verfahren nach Anspruch 8, <u>dadurch gekennzeichnet</u>, daß in an sich bekannter Weise nur einzelne Streifen (100a) der obersten Bodenschicht stärker gekrümelt werden, zwischen denen sich Pflanzen tragende Feldstreifen (110b) befinden.

10. Verfahren nach Anspruch 9, <u>dadurch gekennzeichnet</u>, daß die stärker gekrümelten Feldstreifen (100a) der obersten Bodenschicht (101) im selben Abstand voneinander angeordnet sind, wie die Drill- oder Pflanzreihen der später dort anzubauenden Kulturpflanzen.

11. Verfahren nach mindestens einem der vorhergehenden Ansprüche, <u>dadurch gekennzeichnet</u>, daß die auf den unbearbeiteten Feldstreifen (110b) wachsenden Pflanzen (103) in der Folgezeit ein- oder mehrmals abgeschnitten und entweder oberflächlich eingefräst oder als Mulchdecke auf ihrem eigenen Standort oder auf den angrenzenden mit Kulturpflanzen bestellten Feldstreifen abgelegt werden.

12. Arbeitsgerät zur Durchführung des Verfahrens nach einem oder mehreren der vorhergehenden Ansprüche mit wenigstens zwei an einer motorisch angetriebenen Welle angeordneten, in einer vertikalen Ebene bewegten Haltestielen, an denen wenigstens je ein zur vorderen Schneidkante hin nach unten geneigtes, flügelförmiges Lokkerungsschar zum Unterfahren, Anheben, Aufbrechen
und Ablegen wenigstens einer Bodenschicht angeordnet ist, dadurch gekennzeichnet, daß an jedem Haltestiel mindestens zwei übereinander angebrachte
Lockerungsschare (108, 109) angeordnet sind.

13. Vorrichtung nach Anspruch 12, dadurch gekennzeichnet,
daß das obere Lockerungsschar (108) gegenüber dem unteren Lockerungsschar (109) nach vorne versetzt am
Haltestiel (112) angeordnet ist.

14. Vorrichtung nach Anspruch 12 oder 13, dadurch gekennzeichnet, daß die Unterseite (108b) des oberen
Schares (108) und/oder die Oberseite (109a) des unteren Schares (109) mit an sich bekannten, die Zerkleinerung begünstigenden Messern (115), Rippen, Höckern
(116) o.ä. versehen ist.

15. Vorrichtung nach mindestens einem der Ansprüche 12 bis
14, dadurch gekennzeichnet, daß die Vorderkante (112a)
des Haltestieles (112) mit bei Aufwärtsbewegung wirksamen sägeartigen Zähnen (117) versehen ist.

0025568

16. Vorrichtung zur Durchführung des Verfahrens nach einem der vorhergehenden Ansprüche, dadurch gekennzeichnet, daß vor dem Haltestiel (9') der angetriebenen Lockerungsschare (4') starre Haltestiele (10') angeordnet sind, an deren unterem Ende flügelförmige Lockerungsschare (11') befestigt sind.

17. Vorrichtung nach einem der Ansprüche 1 bis 7, dadurch gekennzeichnet, daß die angetriebenen oder starren Lockerungsschare (4', 11') mit Rippen (5'), Messern (6') versehen sind, die sich von der rückwärtigen, etwa quer zur Fahrtrichtung verlaufenden Kante der Lockerungsschare (4', 11') nach hinten erstrecken.

18. Vorrichtung nach mindestens einem der vorhergehenden Ansprüche, dadurch gekennzeichnet, daß die an den hinteren Kanten der flügelförmigen 'Schare (4', 11') angebrachten Rippen (5') oder Messer (6') über diese hintere Kante hinausragen.

19. Vorrichtung nach mindestens einem der vorhergehenden Ansprüche, dadurch gekennzeichnet, daß die Rippen (5a') bzw. Messer (6a') des oberen Schares (4a') zu den am unteren Schar (4b') angebrachten Rippen (5b') bzw. Messern (6b') auf Lücke stehen.

0025568

20. Vorrichtung nach einem oder mehreren der vorhergehenden Ansprüche, dadurch gekennzeichnet, daß an der hinteren Kante der Haltestiele (9', 10'), Leitelemente (12') für Düngemittel angeordnet sind.

21. Vorrichtung nach Anspruch 20, dadurch gekennzeichnet, daß die Leitelemente (12') seitliche Abzweigungen (13') und Verteilvorrichtungen (14') aufweisen.

22. Vorrichtung nach mindestens einem der vorhergehenden Ansprüche, dadurch gekennzeichnet, daß die Leitelemente (12') trichterförmige Einfüllöffnungen aufweisen, in die der Auslauf (16') von Vorratsbehältern (17') einmündet.

FIG.1

0025568

FIG.2

FIG. 3

FIG. 4

4/8    0025568

FIG. 5

**Fig.6**

**Fig.7**

0025568

## Fig. 8

# Fig.9

0025568

7/8

# Fig.10

# Fig.11

# Fig.12

# Fig.13

# EUROPÄISCHER RECHERCHENBERICHT

**Europäisches Patentamt**

0025568
Nummer der Anmeldung

EP 80 10 5307.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 952 322 (J. JURCHECK)<br>* Spalte 5, Zeile 14 bis Spalte 6, Zeile 40; Fig. 1, 4 bis 8 *<br>-- | 1,6,8 |
| | DD - A - 35 151 (A. GORA)<br>* Ansprüche 1, 2; Fig. 1 bis 3 *<br>-- | 1,6,<br>12 |
| | DE - U - 1 630 336 (H. DAVIDS)<br>* ganzes Dokument *<br>-- | 6,12,<br>13,20,<br>21 |
| | FR - A - 1 550 012 (A. BRAUN)<br>* ganzes Dokument *<br>-- | 6,12,<br>20 |
| | GB - A - 1 453 486 (G.E.W. LEWIN)<br>* ganzes Dokument *<br>-- | 6,20 |
| | DE - A1 - 2 652 734 (E. WEICHEL)<br>* Seite 5, Zeilen 1 bis 23; Fig. 1 *<br>-- | 12 |
| | FR - A - 2 202 632 (G.J.M. BALLU)<br>* Fig. 1 bis 3 *<br>-- | 12 |
| | US - A - 3 326 009 (A.R. GAGNE)<br>* Spalte 5, Zeilen 10, 11; Fig. 1 *<br>-- | 15 |
| A | DE - A1 - 2 752 646 (B.H. NORBURY)<br>* Anspruch 10 *<br>---- | |

**KLASSIFIKATION DER ANMELDUNG (Int.Cl.3)**

A 01 B 13/14
A 01 B 17/00

**RECHERCHIERTE SACHGEBIETE (Int. Cl.3)**

A 01 B 11/00
A 01 B 13/00
A 01 B 17/00
A 01 B 79/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 09-12-1980 | SCHOFER |

EPA form 1503.1  06.78